# EUROPÄISCHE PATENTSCHRIFT

(11) **EP 1 371 441 B1**
(45) Veröffentlichungstag und Bekanntmachung des Hinweises auf die Patenterteilung: **05.07.2006**
(21) Anmeldenummer: 03011809.5
(22) Anmeldetag: 26.05.2003
(51) Int. Cl.: B23K 20/10

(54) **Verfahren zum Ultraschallschweissen von metallischen Bauteilen**
Method of ultrasonic welding metal parts
Procédé de soudage par ultrasons des pieces métalliques

(30) Priorität: 14.06.2002 DE 10226558
(43) Veröffentlichungstag der Anmeldung: 17.12.2003
(73) Patentinhaber: ROBERT BOSCH GMBH, 70442 Stuttgart (DE)
(72) Erfinder: Weber, Peter, 48485 Neuenkirchen (DE)

(56) Entgegenhaltungen:
- GB-A- 998 124
- US-A- 4 047 657
- US-A- 4 496 095
- US-A- 4 975 133
- US-A- 5 082 160

## Beschreibung

Die Erfindung betrifft ein Verfahren zum Verschweißen von metallischen Bauteilen nach dem Oberbegriff des Patentanspruches 1.
Derartige Ultraschall-Schweißverfahren zum Verschweißen von metallischen Bauteilen, insbesondere von einem dünnwandigen Bauteil auf einem massiveren Bauteil sind allgemein bekannt. Beispielsweise offenbart die DE 22 10 855 C3 ein Verfahren zum direkten Verbinden von Metallteilen an einer Grenzfläche. Dazu werden die Metallteile einer Reibbehandlung mit hoher Relativgeschwindigkeit zwischen einem mit hoher Geschwindigkeit umlaufenden Reibwerkzeug und der Arbeitsfläche unterzogen. Die erzeugten Energieimpulse liegen dabei im Bereich von Ultraschallwellen.
Am Ultraschall-Schweißgerät ist ein rollenartiges Schweißwerkzeug erforderlich, die so genannte Sonotrode. Diese ist auf einen Erreger abgestimmt, besitzt auf ihrem als Kontaktstelle dienenden Außenumfang eine speziell gestaltete Oberfläche, und wirkt mit einem Anpressdruck sowie mit Hochfrequenzschwingungen quer zum Schweißnahtverlauf auf das Werkstück. Beim Ultraschall-Schweißen ist es üblich, die beiden Bauteile in einer Werkstückaufnahme gemeinsam aufzuspannen. Das massivere Bauteil bildet dabei die Unterlage und wird vom dünnwandigen Bauteil überdeckt, so dass das Schweißwerkzeug darüber rollt. An den Kontaktstellen kommt es dann durch Druck- und Temperatureinflüsse zur Verschweißung, wobei allerdings eine oxidfreie Oberfläche in diesen Zonen vorausgesetzt wird.
Angewendet wird das gattungsgemäße Ultraschall-Schweißverfahren zum Beispiel zum Verschweißen von sehr dünnen Absorberblechen mit dem Rohrregister eines Sonnenkollektors. Entlang der vorzugsweise aus Kupfer gefertigten, parallelen Rohre des Rohrregisters verlaufen streifenförmig die Schweißnähte, über die gleichzeitig die Wärme vom Absorberblech in das zugeordnete Rohr eingetragen wird. Um mögliche Oxidschichten zu entfernen, war es seither üblich, die Oberfläche des Rohrregisters an den Kontaktstellen im Schweißnahtbereich leicht anzuschleifen, bevor es mit der Werkstückaufnahme eingespannt wurde. Auch waren an die Werkstückaufnahme sowie das Rohrregister selbst sehr hohe Toleranzanforderungen zu stellen, um zum Beispiel Schweißfehler durch Unebenheiten zu vermeiden. Im Anwendungsfall Sonnenkollektoren würden Schweißfehler neben optischen Mängeln auch eine schlechtere Wärmeleitung sowie eine Leckstelle bedeuten, da bei einigen Sonnenkollektor-Ausführungen ein gasdichter Raum vom Absorberblech begrenzt wird.

Der Erfindung liegt die Aufgabe zugrunde, ein Ultraschall-Schweißverfahren zum Verschweißen von metallischen Bauteilen, insbesondere von einem dünnwandigen Bauteil auf einem massiveren Bauteil, zu optimieren.

Erfindungsgemäß wird dies mit den Merkmalen des Patentanspruches 1 gelöst. Vorteilhafte Weiterbildungen sind den Unteransprüchen zu entnehmen.
Das Verfahren zum Verschweißen von metallischen Bauteilen ist dadurch gekennzeichnet, dass in einem ersten Arbeitsschritt ein Schweißvorgang durchgeführt wird, bei dem nur das massivere Bauteil mit dem Schweißwerkzeug abgefahren wird. Danach erfolgt in einem zweiten Arbeitsschritt in der selben Aufspannung ein weiterer Schweißvorgang, bei dem das dünnwandige Bauteil mit dem massiveren Bauteil verbunden wird. Der Schweißvorgang im ersten Arbeitsschritt kann mit einer höheren Arbeitsgeschwindigkeit durchgeführt werden als der eigentliche Schweißvorgang zum Verbinden des dünnwandigen Bauteils mit dem massiveren Bauteil im zweiten Arbeitsschritt.
Mit der erfindungsgemäßen Gestaltung wird ein einfaches Ultraschall-Schweißverfahren zum Verschweißen von metallischen Bauteilen geschaffen. Durch den ersten Arbeitsgang wird die Kontaktstelle am massiveren Bauteil vorbereitet, so dass das übliche Abschleifen der Oxidschicht vollständig entfallen kann. Sowohl an die Toleranzen bei der Vorfertigung des Rohrregisters bei Sonnenkollektoren als auch an die der Werkstückaufnahme werden geringere Anforderungen gestellt, da möglicherweise vorhandene Unebenheiten beim ersten Schweißvorgang, insbesondere durch den Anpressdruck, ausgeglichen werden. Weiterhin wird eine definierte Anlagefläche für die Verschweißung im zweiten Arbeitsgang geschaffen.

In allen Anwendungsfällen werden somit Schweißfehler vermieden, die Festigkeit der Schweißnähte verbessert, und speziell bei Sonnenkollektoren ist ein guter Wärmeübergang sichergestellt. Die Dicke des Absorberbleches kann zudem weiter reduziert werden, ohne die Prozesssicherheit zu gefährden.

Die Zeichnung stellt ein Ausführungsbeispiel der Erfindung dar. Es zeigt ein Ultraschall-Schweißverfahren zum Verschweißen von metallischen Bauteilen am Beispiel eines Sonnenkollektors:
- Fig. 1:: mit einem ersten Arbeitsschritt zur Vorbereitung eines ersten Bauteils und
- Fig. 2:: mit einem zweiten Arbeitsschritt zum Verbinden von zwei Bauteilen.

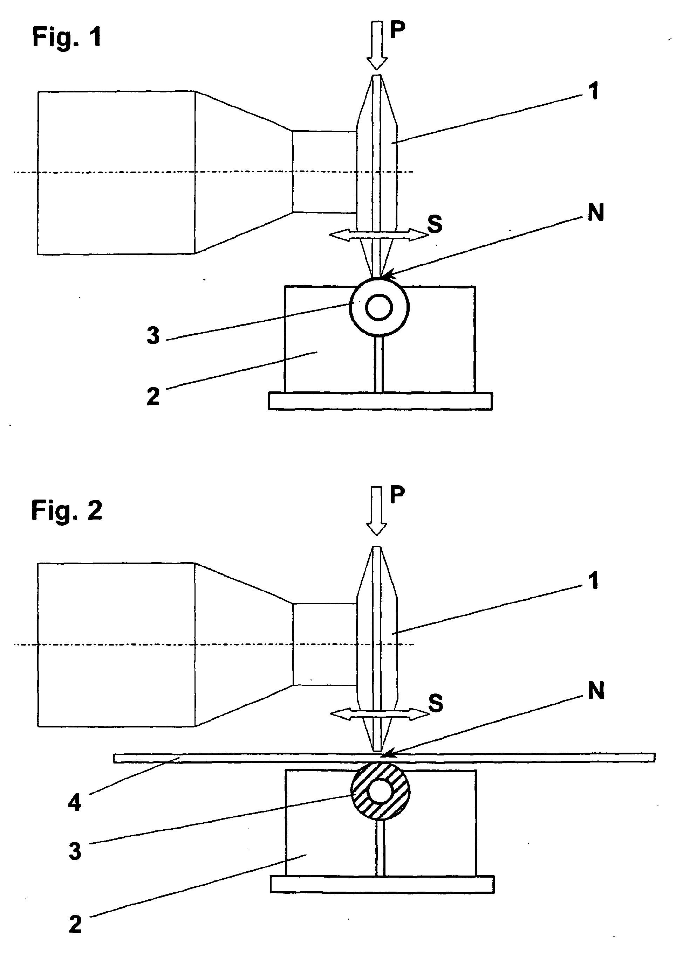

Ein Ultraschall-Schweißgerät besitzt ein rollenartiges Schweißwerkzeug 1, welches mit einem Anpressdruck (P) sowie mit Hochfrequenzschwingungen (S) quer zum Verlauf der Schweißnaht (N) auf ein Werkstück wirkt.
In einer Werkstückaufnahme 2 wird ein massiveres Bauteil 3, hier in Form eines Rohres, eingespannt. Auf dieses soll ein dünnwandigeres Bauteil 4, nämlich ein Absorberblech, aufgeschweißt werden.
Zunächst wird in einem ersten Arbeitsschritt gemäß Fig. 1 ein erster Schweißvorgang durchgeführt, bei dem nur das massivere Bauteil 3 mit dem Schweißwerkzeug 1 abgefahren wird. Erst danach wird das dünnwandige Bauteil 4 mit dem massiveren Bauteil 3 in einem zweiten Arbeitsschritt gemäß Fig. 2 in der selben Aufspannung durch einen weiteren Schweißvorgang verbunden.

## Patentansprüche

1. Verfahren zum Verschweißen von einem dünnwandigen metallischen Bauteil (4) auf einem massiveren metallischen Bauteil (3), mit einem rollenartigen Schweißwerkzeug (1) eines Ultraschall-Schweißgerätes, welches mit einem Anpressdruck (P) sowie mit Hochfrequenzschwingungen (S) quer zum Verlauf der Schweißnaht (N) auf das Werkstück wirkt,
**dadurch gekennzeichnet, dass** in einem ersten Arbeitsschritt ein Schweißvorgang durchgeführt wird, bei dem nur das massivere Bauteil (3) mit dem Schweißwerkzeug (1) abgefahren wird, und dass danach in einem zweiten Arbeitsschritt in der selben Aufspannung ein weiterer Schweißvorgang erfolgt, bei dem das dünnwandige Bauteil (4) mit dem massiveren Bauteil (3) verbunden wird.

2. Verfahren nach Anspruch 1,
**dadurch gekennzeichnet, dass** der Schweißvorgang im ersten Arbeitsschritt mit einer höheren Arbeitsgeschwindigkeit durchgeführt wird als der Schweißvorgang zum Verbinden des dünnwandigen Bauteils (4) mit dem massiveren Bauteil (3) im zweiten Arbeitsschritt.

## Claims

1. A method for welding a thin-walled metal component (4) on a more solid metal component (3), using a roll-like welding tool (1) of an ultrasonic welding device which acts on the workpiece with a contact pressure (P) and with high-frequency vibrations (S) transverse to the run of the weld seam (N),
**characterised in that** in a first working step a welding process is carried out wherein only the more solid component (3) is traced with the welding tool (1) and that thereafter in a second working step a further welding process is carried out in the same set-up wherein the thin-walled component (4) is bonded to the more solid component (3).

2. The method according to claim 1,
**characterised in that** the welding process in the first working step is carried out at a higher working speed than the welding process for bonding the thin-walled component (4) to the more solid component (3) in the second working step.

## Revendications

1. Procédé de soudure d'une pièce de construction métallique à paroi mince (4) sur une pièce de construction métallique plus massive (3) à l'aide d'un outil de soudure en forme de rouleau (1) d'un appareil de soudure à ultrasons qui agit par une force de compression (P) ainsi que des vibrations à haute fréquence (S) transversalement à l'orientation du cordon de soudure (N) sur la pièce usinée,
**caractérisé en ce que**, dans une première étape de soudure, on réalise un processus de soudure lors duquel seule la pièce de construction la plus massive (3) est parcourue par l'outil de soudure (1) et qu'ensuite, au cours d'une deuxième étape de travail, avec le même montage, il y a un autre processus de soudure lors duquel la pièce de construction à paroi mince (4) est connectée à la pièce de construction plus massive (3).

2. Procédé selon la revendication 1,
**caractérisé en ce que** le processus de soudure est réalisé au cours d'une première étape de travail à une vitesse de travail plus élevée que le processus de soudure pour la connexion de la pièce de construction à paroi mince (4) avec la pièce de construction plus massive (3) au cours de la deuxième étape de travail.
